# FASCICULE DE BREVET EUROPEEN

(11) **EP 0 786 376 B1**
(45) Date de publication et mention de la délivrance du brevet: **07.06.2000**
(21) Numéro de dépôt: 97400164.6
(22) Date de dépôt: 24.01.1997
(51) Int. Cl.: B60Q 1/04

(54) **Projecteur comportant un dispositif de stabilisation du miroir**
Scheinwerfer mit Reflektorstabilisation
Headlight with reflector stabilisation

(30) Priorité: 24.01.1996 FR 9600787
(43) Date de publication de la demande: 30.07.1997
(73) Titulaire: VALEO VISION, 93000 Bobigny (FR)
(72) Inventeur: Salmon, Jean, 7800 Ath (BE); Perrin, Pierre, 93150 Le Blanc-Mesnil (FR)
(74) Mandataire: Le Forestier, Eric

(56) Documents cités:
- EP-A- 0 267 814
- FR-A- 1 352 050
- US-A- 2 910 577

## Description

La présente invention concerne un dispositif de stabilisation d'au moins un réflecteur de projecteur de véhicule automobile.

Elle concerne plus particulièrement un dispositif de stabilisation d'un réflecteur comprenant au moins un appui essentiellement ponctuel contre une structure fixe et une partie en porte-à-faux par rapport audit appui essentiellement ponctuel.

Elle concerne également un projecteur de véhicule automobile comprenant un tel dispositif de stabilisation, ledit projecteur étant muni d'au moins un réflecteur et équipé d'un dispositif de réglage de l'orientation du faisceau lumineux émis, selon deux directions perpendiculaires, définissant trois points d'appui sur ledit réflecteur, lesdits points d'appui étant disposés aux trois sommets d'un triangle rectangle.

On connait déjà des projecteurs de véhicule automobile qui comprennent au moins un réflecteur comportant en particulier trois appuis essentiellement ponctuels contre une structure fixe, les trois appuis étant disposés aux trois sommets d'un triangle rectangle, l'un desdits appuis étant fixe et les deux autres délimitant un côté du triangle étant réglables. Dans de tels projecteurs, une partie importante du réflecteur, correspondante à la partie symétrique de la partie couverte par le triangle rectangle par rapport à la diagonale du triangle, se trouve en porte-à-faux par rapport aux appuis dudit réflecteur contre ladite structure fixe.

Lorsqu'un tel projecteur est soumis à de fortes sollicitations mécaniques dues à des conditions d'utilisations dures et intensives, ce qui est le cas par exemple des projecteurs de camions, de véhicules de terrain à quatres roues motrices ou encore de véhicules de chantier, la partie en porte-à-faux du réflecteur a tendance à vibrer de façon indésirable, ce qui peut provoquer, pour de grandes amplitudes de vibration, un scintillement et/ou une déformation du faisceau émis par le projecteur, une fragilisation du réflecteur allant parfois même jusqu'à sa rupture, ainsi qu'une cassure de l'ampoule du projecteur et une usure rapide des fixations du réflecteur sur ladite partie fixe.

Par ailleurs, on connaît du document US - 2 910 577 un projecteur dans lequel le bloc optique comprenant un réflecteur, une lampe montée sur le réflecteur et une glace de fermeture, est monté à l'avant d'un boîtier fixé sur une partie structurelle du véhicule, avec un système d'amortissement des vibrations du type ressort, élément compressible en matériau élastomère interposé entre les fixations du boîtier et ladite partie structurelle de véhicule automobile.

En outre, le document EP - 0 267 814 décrit un projecteur pour véhicule comportant un carter et bloc optique amovible fixé à l'avant du carter par l'intermédiaire de plots amortisseurs en élastomère disposés de telle sorte que le plan perpendiculaire à l'axe du projecteur et passant par le centre de gravité du bloc optique coupe lesdits plots.

Enfin, le document FR - 1 352 050 décrit un phare de véhicule automobile qui comprend un système optique susceptible d'osciller librement à l'intérieur d'une enceinte support, ledit système optique oscillant étant équilibré par un lest qui est disposé dans sa partie médiane inférieure de telle sorte qu'il est stabilisé par rapport aux déplacements angulaires de l'enceinte.

Pour remédier aux inconvénients précédemment mentionnés de l'état de la technique, la présente invention propose un dispositif de stabilisation d'au moins un réflecteur de projecteur, comprenant au moins un appui ponctuel réglable ou non contre une structure fixe, et une partie en porte-à-faux dudit réflecteur par rapport audit appui, ledit dispositif de stabilisation permettant de fournir un point d'appui supplémentaire de la partie en porte-à-faux dudit réflecteur sur ladite structure fixe, en amortissant les amplitudes de vibration de ladite partie en porte à faux, et en autorisant un réglage éventuel du faisceau lumineux émis par le projecteur par l'intermédiaire d'un autre appui réglable du réflecteur contre ladite structure fixe.

Plus particulièrement, selon l'invention, le dispositif de stabilisation comporte au moins un élément d'amortissement dont une première extrémité définit un appui supplémentaire, pour sur ladite partie en porte-à-faux dudit réflecteur, et dont une deuxième extrémité est solidaire de ladite structure fixe de telle manière que pour de faibles sollicitations mécaniques du réflecteur, ledit appui supplémentaire reste essentiellement immobile par rapport à ladite structure fixe, et pour de fortes sollicitations mécaniques du réflecteur, ledit appui supplémentaire se déplace axialement par rapport à ladite structure fixe avec des amplitudes de déplacement limitées.

On notera que l'élément de stabilisation du faisceau lumineux conforme à la présente invention, autorise par déplacement linéaire de l'ensemble d'amortissement, le réglage éventuel de l'orientation du faisceau lumineux en agissant sur un appui réglable du réflecteur.

En utilisation, en cas de faibles sollicitations du réflecteur, il n'y a pas de déplacement axial de l'appui supplémentaire. En outre, il amortit efficacement les vibrations à des fréquences de résonance dudit réflecteur fortement sollicité, l'appui supplémentaire se déplaçant alors de façon limitée, ce qui permet de garder stable ledit faisceau lumineux.

Selon une caractéristique du dispositif de stabilisation conforme à l'invention, la première extrémité de l'ensemble d'amortissement comprend une tête sphérique destinée à être montée à la manière d'une rotule dans un logement de forme complémentaire, prévu à l'arrière de la partie en porte-à-faux dudit réflecteur.

Selon un mode de réalisation préféré du dispositif de stabilisation conforme à l'invention, l'ensemble d'amortissement comprend un élément mobile coopérant par frottement avec une paroi d'un boîtier solidaire de la structure fixe et guidé par ladite paroi.

Selon un autre mode de réalisation du dispositif conforme à la présente invention, l'ensemble d'amortissement comprend un élément qui coopére par frottement avec la paroi externe de l'élément mobile.

Selon un autre mode de réalisation du dispositif de stabilisation conforme à l'invention, l'ensemble d'amortissement est un amortisseur à air.

Selon un autre mode réalisation du dispositif de stabilisation conforme à l'invention, l'ensemble d'amortissement est un amortisseur à huile.

La description qui va suivre, en regard des dessins annexés, donnés à titre d'exemples non limitatifs, fera bien comprendre en quoi consiste l'invention et comment elle peut être réalisée.

Sur les dessins annexés :
- la figure 1 est une vue schématique arrière d'un réflecteur d'un projecteur conforme à la présente invention,
- la figure 2 est une vue schématique en coupe longitudinale d'un premier mode de réalisation du dispositif de stabilisation selon l'invention,
- la figure 3 est une vue schématique en coupe longitudinale d'un deuxième mode de réalisation du dispositif de stabilisation selon l'invention, et
- la figure 4 est une vue schématique en coupe longitudinale d'un troisième mode de réalisation du dispositif de stabilisation selon l'invention.

Préliminairement, on notera que d'une figure à l'autre, les éléments identiques ou similaires seront désignés, dans la mesure du possible, par les mêmes signes de référence et ne seront pas décrits à chaque fois.

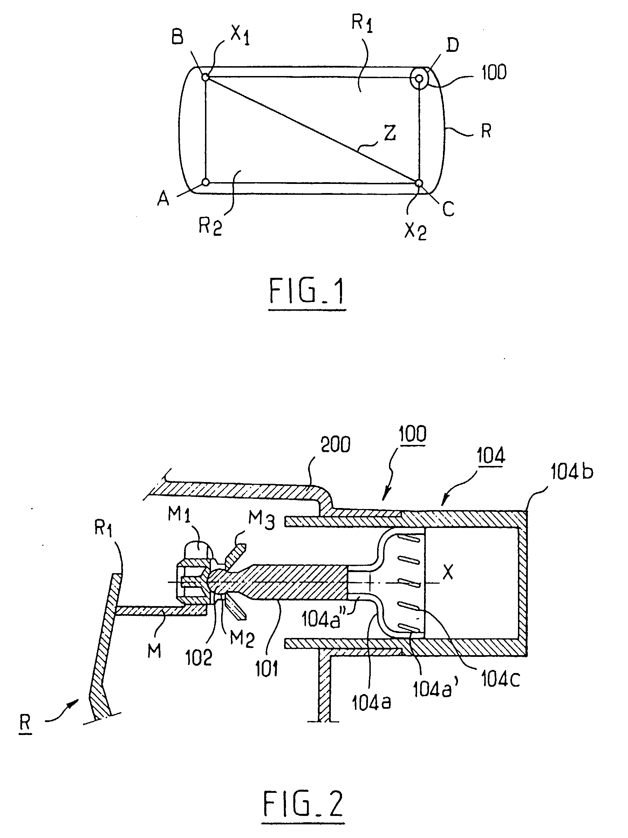

Sur la figure 1, on a représenté la face arrière d'un réflecteur R d'un projecteur d'un véhicule automobile (non représenté), qui s'appuie sur une partie fixe, par exemple la paroi arrière d'un boîtier du projecteur, par l'intermédiaire de trois montants (également non représentés) sur trois appuis essentiellement ponctuels A,B,C. Ces trois appuis A,B,C définissent ensemble un triangle rectangle, l'appui A étant fixe et les deux appuis B,C étant réglables.

Comme on peut le voir sur la figure 1, l'appui A est situé au sommet de l'angle droit du triangle rectangle et les deux appuis B, C sont alignés suivant l'hypoténuse Z du triangle, le point B étant situé à l'extrémité supérieure et le point C à l'extrémité inférieure de ladite hypoténuse Z.

Les appuis ponctuels B,C sont déplaçables, au moyen d'un dispositif de réglage conventionnel qui ne sera pas décrit en détail ici, selon des axes X1, X2 perpendiculaires au plan du triangle, pour modifier l'orientation verticale et horizontale du réflecteur et réaliser l'orientation en site et en azimut du faisceau lumineux émis par le projecteur.

Le réflecteur R comporte une partie R1 positionnée en porte-à-faux par rapport aux appuis A, B, C de celui-ci. Plus précisement, la partie en porte-à-faux R1 est située du côté de l'hypoténuse Z opposé à la partie R2 couverte par ledit triangle rectangle, les parties R1 et R2 définissant ensemble un rectangle dont la diagonale est ladite hypoténuse Z.

A l'arrière de la partie en porte à faux R1 du réflecteur R, est monté un dispositif de stabilisation 100 du réflecteur conformément à la présente invention.

Comme on peut le voir sur la figure 1, ledit dispositif de stabilisation 100 coopère avec la partie arrière de la partie en porte-à-faux R1 du réflecteur R de façon à définir un point d'appui supplémentaire essentiellement ponctuel D positionné au quatrième sommet du rectangle précité, dont les trois premiers sommets correspondent aux points A, B, C.

Sur la figure 2, on a représenté un premier mode de réalisation du dispositif de stabilisation 100 du réflecteur.

Ce dispositif de stabilisation 100 comporte un élément de liaison 101 se présentant sous la forme d'une tige de piston d'axe X parallèle aux axes X1, X2. Cette tige de piston 101 comporte à sa première extrémité 102 une tête sphérique. Cette tête sphérique est destinée à être montée à la manière d'une rotule dans un aménagement d'un montant M solidaire de la partie en porte-à-faux R1 du réflecteur R pour définir l'appui D.

Selon le mode de réalisation représenté, le montant M comporte à son extrémité opposée à celle solidaire du réflecteur R, une portion M1 s'élévant essentiellement perpendiculairement à l'axe du montant M et comprenant une capsule dans laquelle vient s'encliqueter un élément de montage pourvu d'un logement M2 de montage de ladite tête sphérique, présentant une forme essentiellement complémentaire à celle-ci.

A partir du bord circulaire périphérique du logement M2 destiné à accueillir la tête sphérique de l'élément amortisseur 101, s'étend une portion M3 évasée vers l'extérieur, la jonction entre cette portion M3 évasée vers l'extérieur et le bord circulaire du logement M2, formant un point dur pour le montage par cloquage de la tête sphérique de l'élément de liaison 101 dans le logement M2.

L'élément de liaison 101 comporte une deuxième extrémité opposée 103 reliée à un ensemble d'amortissement 104.

Selon le mode de réalisation représenté sur la figure 2, l'ensemble d'amortissement 104 comporte un élément mobile 104a présentant une première partie tubulaire 104a' raccordée une seconde partie tubulaire 104a" de plus petit diamètre.

La seconde partie tubulaire 104a" est emmanchée ou vissée sur la deuxième extrémité 103 de l'élément de liaison 101. La paroi externe de la première partie tubulaire 104'a de l'élément 104a coopére par frottement avec la paroi interne d'un boîtier 104b se présentant sous la forme d'un cylindre creux d'axe X monté à l'arrière de la structure fixe 200 du projecteur.

En outre, l'ensemble d'amortissement 104 comporte un ressort 104c disposé à l'intérieur de la première partie tubulaire 104'a de l'élément 104a de l'ensemble d'amortissement 104, de telle sorte qu'il applique une pression constante à la surface externe de ladite première partie tubulaire 104'a pour la maintenir en contact avec la paroi interne du boîtier 104b.

Les matériaux constituant l'élément de liaison 101, le boîtier cylindrique 104b et l'élément 104a de l'ensemble d'amortissement sont choisis de manière à éviter les problèmes de collage, de soudure, d'usure et favoriser le glissement à sec dudit élément 104a contre la paroi interne du boîtier 104b.

Bien entendu, on peut prévoir d'utiliser un lubrifiant compatible avec les matériaux utilisés pour favoriser le frottement de l'élément 104a contre la paroi interne du boîtier 104b de l'ensemble d'amortissement.

Le dispositif décrit ci-dessus opère comme suit :

Pour de faibles sollicitations mécaniques du réflecteur R, le coefficient de frottement statique de l'élément 104a contre la paroi interne du boîtier 104b de l'ensemble d'amortissement 104 est supérieur au coefficient de frottement dynamique. De ce fait, l'élément amortisseur 101 tend à rester immobile par rapport au boîtier 104b et donc à la structure fixe 200.

Pour des sollicitations plus importantes, la première partie tubulaire 104'a de l'élément 104a frotte sur la paroi interne du boîtier 104b et l'élément amortisseur 101 se déplace en translation axiale selon l'axe X.

Le frottement dynamique dudit élément 104a sur la paroi interne du boîtier 104b limite alors les amplitudes de déplacement, en particulier d'oscillation, dudit élément de liaison 101 et de l'appui D permettant par là même d'amortir les vibrations de la partie en porte-à-faux R1 du réflecteur R, ce qui contribue à la stabilité du faisceau lumineux émis.

Il est à préciser qu'un tel dispositif de stabilisation autorise le réglage de l'orientation du faisceau lumineux par déplacement des différents points d'appui B et C. A cet effet, la géométrie de la première extrémité 102 de l'élément amortisseur 101, en forme de tête sphérique et son montage à la manière d'une rotule dans le logement M2 du montant M, permet un pivotement dudit montant M par rapport audit élément amortisseur 101 lors du réglage du réflecteur R.

Quelque soit la position angulaire de l'élément amortisseur 101 par rapport au réflecteur, par suite des réglages successifs de celui-ci, ledit élément amortisseur conserve alors toute sa fonctionnalité.

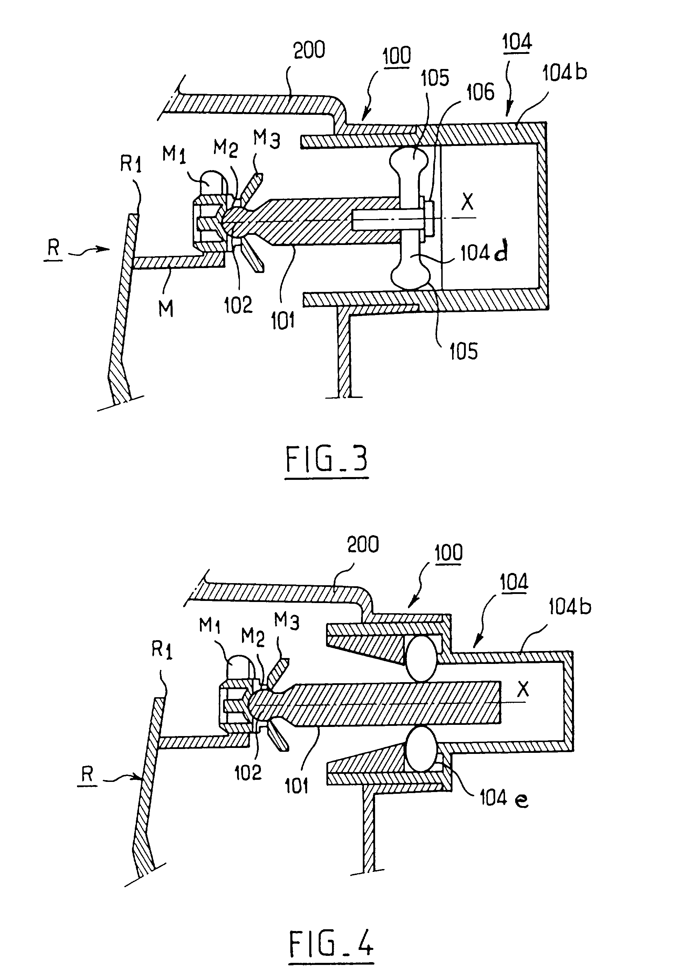

Selon la variante représentée sur la figure 3, l'élément mobile de l'ensemble d'amortissement 104d comporte un corps s'étendant essentiellement perpendiculairement à l'axe X de l'élément de liaison 101, muni à sa périphérie, d'une partie renflée 105 apte à venir au contact de la paroi interne du boîtier cylindrique 104b.

L'élément 104d est réalisé par exemple en élastomère silicone.

Cet élément 104d est monté sur la seconde extrémité 103 de l'élément de liaison 101 au moyen d'une vis 106 qui traverse ledit élément 104d dans la partie médiane de son corps pour venir se visser à l'intérieur de l'élément de liaison 101.

Les parties renflées 105 de l'élément 104d sont aptes à coulisser avec frottement contre la paroi interne du boîtier 104b.

On peut ici aussi envisager d'utiliser un lubrifiant compatible avec les matériaux utilisés pour l'élément 104d et le boîtier 104b de façon à favoriser le glissement de l'élément 104d contre la paroi interne du boîtier 104b.

Là encore, pour de faibles sollicitations mécaniques du réflecteur R, les frottements statiques des parties renflées 105 de l'élément 104d sont plus importants que les frottements dynamiques. De ce fait, l'élément amortisseur 101 tend à rester immobile par rapport au boîtier 104b et à la structure fixe 200 du projecteur.

Pour de fortes sollicitations mécaniques du réflecteur, les frottements dynamiques deviennent supérieurs aux frottements statiques et l'élément 104d a tendance à se déplacer en translation selon l'axe X en frottant contre la paroi interne du boîtier 104b, ce qui entraîne le déplacement de l'élément amortisseur 101 selon l'axe X avec des amplitudes de déplacement limitées de façon à amortir les vibrations de la partie en porte-à-faux R1 du réflecteur R.

Le lubrifiant utilisé selon ce mode de réalisation peut être avantageusement de la graisse fluoro-silicone. Le boîtier 104b peut être réalisé en PBT.

Selon le mode de réalisation représenté sur la figure 4, l'ensemble d'amortissement comprend un élément fixe 104e constitué par un joint torique immobilisé dans une gorge formée par un décrochement de la paroi interne du boîtier cylindrique 104b et une bague 107 de contreappui. Le joint torique 104e est alors en contact avec la paroi externe de l'élément de liaison 101 au niveau de sa deuxième extrémité 103, cet élément de liaison constituant directement l'élément mobile de l'ensemble d'amortissement.

En cas de sollicitations du réflecteur R, le joint torique tend à se comprimer à l'intérieur de ladite gorge de façon soit à maintenir immobile l'élément amortisseur 101 par rapport au boîtier 104b et de ce fait à la structure fixe 200 (en cas de faibles sollicitations du réflecteur), soit à amortir les déplacements de l'élément de liaison 101 selon l'axe X, (en cas de fortes sollicitations du réflecteur R). Le joint torique 104e peut être réalisé en élastomère fluoré. L'élément de liaison 101 peut être réalisé en acier chromé ou en POM.

On peut ici aussi utiliser une graisse minérale de façon à faciliter le frottement du joint torique 104e contre la paroi externe de l'élément de liaison 101.

La présente invention n'est nullement limitée au mode de réalisation décrit et représenté.

Par exemple, on peut envisager d'utiliser comme ensemble d'amortissement, un amortisseur à air, ou un amortisseur à huile qui serait monté entre la deuxième extrémité de l'élément de liaison et la structure fixe.

## Revendications

1. Dispositif de stabilisation (100) d'au moins un réflecteur (R) de projecteur de véhicule automobile, comprenant au moins un appui essentiellement ponctuel (A, B, C) contre une structure fixe (200) et une partie en porte-à-faux (R1) par rapport audit appui essentiellement ponctuel (A, B, C), caractérisé en ce qu'il comporte au moins un ensemble d'amortissement (104) dont une première extrémité (102) définit un appui supplémentaire (D), pour ladite partie en porte-à-faux (R1) du réflecteur (R), et dont une deuxième extrémité (104b) est solidaire de ladite structure fixe (200) de manière que pour de faibles sollicitations mécaniques du réflecteur (R), ledit appui supplémentaire (D) reste essentiellement immobile par rapport à ladite structure fixe (200) et pour de fortes sollicitations mécaniques du réflecteur (R), ledit appui supplémentaire (D) se déplace axialement par rapport à ladite structure fixe (200) avec des amplitudes de déplacement limitées.

2. Dispositif de stabilisation (100) selon la revendication 1, caractérisé en ce que la première extrémité (102) de l'ensemble d'amortissement comprend une tête sphérique destinée à être montée à la manière d'une rotule dans un logement (M2) de forme complémentaire, prévu à l'arrière de la partie à porte à faux (R1) dudit réflecteur (R).

3. Dispositif de stabilisation selon l'une des revendications 1 ou 2, caractérisé en ce que l'ensemble d'amortissement (104) comprend un élément mobile (104a) coopérant par frottement avec une paroi d'un boîtier (104b) solidaire de la structure fixe (200) et guidé par ladite paroi.

4. Dispositif de stabilisation selon la revendication 3, caractérisé en ce que ledit élément mobile (104a) coopérant par frottement avec la paroi d'un boîtier (104b) de l'ensemble d'amortissement (104), comporte une première partie tubulaire (104'a) dont la paroi externe coopère par frottement avec ledit boîtier (104b), et une seconde partie (104"a) apte à recevoir un élément de liaison (101) définissant ledit appui supplémentaire (D)

5. Dispositif de stabilisation selon la revendication 3, caractérisé en ce que ledit élément mobile (104d) coopérant par frottement avec la paroi du boîtier (104b) de l'ensemble d'amortissement (104), comprend un corps (104d) monté sensiblement perpendiculairement sur un élément de liaison (101), ce corps étant pourvu à sa périphérie d'une partie renflée (105) coopérant par frottement avec la paroi du boîtier (104b).

6. Dispositif de stabilisation selon l'une des revendications 1 ou 2, caractérisé en ce que l'ensemble d'amortissement (104) comprend au moins un élément (104e) immobilisé par rapport à la structure fixe et coopérant par frottement avec la paroi externe d'un élément mobile (101) portant ledit appui supplémentaire (D).

7. Dispositif de stabilisation selon la revendication 6, caractérisé en ce que ledit élément (104e) coopérant par frottement avec la paroi externe de l'élément mobile (101) est un joint torique logé dans une gorge prévue dans un boîtier (104b) solidaire de ladite structure fixe (200).

8. Dispositif de stabilisation selon l'une des revendications 1 ou 2, caractérisé en ce que l'ensemble d'amortissement est un amortisseur à air.

9. Dispositif de stabilisation selon l'une des revendications 1 à 2, caractérisé en ce que l'ensemble d'amortissement est un amortisseur à l'huile.

10. Projecteur de véhicule automobile, muni d'au moins un réflecteur et équipé d'un dispositif de réglage de l'orientation du faisceau lumineux émis, selon deux directions perpendiculaires, définissant trois points d'appui sur le réflecteur, lesdits points d'appui étant disposés aux trois sommets d'un triangle rectangle, caractérisé en ce qu'il comporte un dispositif de stabilisation du réflecteur selon l'une quelconque des revendications 1 à 9.

11. Projecteur selon la revendication 10, caractérisé en ce que le dispositif de stabilisation est prévu en un quatrième point, les quatre points étant situés sensiblement aux quatre sommets d'un rectangle.

## Patentansprüche

1. Stabilisierungsvorrichtung (100) zur Stabilisierung wenigstens eines Reflektors (R) eines Kraftfahrzeugs, umfassend wenigstens eine im- wesentlichen punktuelle Auflagestelle (A, B, C) an einer ortsfesten Struktur (200) und einen im Verhältnis zu der besagten im wesentlichen punktuellen Auflagestelle (A, B, C) auskragenden Teil (R1), **dadurch gekennzeichnet,** daß sie wenigstens eine Dämpfungseinheit (104) umfaßt, deren erstes Ende (102) eine zusätzliche Auflagestelle (D) für den besagten auskragenden Teil (R1) des Reflektors (R) definiert und deren zweites Ende (104b) fest mit der besagten ortsfesten Struktur (200) verbunden ist, so daß die besagte zusätzliche Auflagestelle (D) bei schwachen mechanischen Beanspruchungen des Reflektors (R) im Verhältnis zu der besagten ortsfesten Struktur (200) im wesentlichen unbeweglich bleibt und die besagte zusätzliche Auflagestelle (D) sich bei starken mechanischen Beanspruchungen des Reflektors (R) im Verhältnis zu der besagten ortsfesten Struktur (200) mit begrenzten Verschiebungsamplituden axial verschiebt.

2. Stabilisierungsvorrichtung (100) nach Anspruch 1, **dadurch gekennzeichnet,** daß das erste Ende (102) der Dämpfungseinheit einen Kugelkopf umfaßt, der für die kugelgelenkartige Lagerung in einer formschlüssigen Aufnahme (M2) bestimmt ist, die an der Rückseite des auskragenden Teils (R1) des besagten Reflektors (R) vorgesehen ist.

3. Stabilisierungsvorrichtung nach einem der Ansprüche 1 oder 2, **dadurch gekennzeichnet,** daß die Dämpfungseinheit (104) ein bewegliches Element (104a) umfaßt, das reibschlüssig mit einer Wand eines Gehäuses (104b) zusammenwirkt, das fest mit der ortsfesten Struktur (200) verbunden ist und durch die besagte Wand geführt wird.

4. Stabilisierungsvorrichtung nach Anspruch 3, **dadurch gekennzeichnet,** daß das besagte bewegliche Element (104a), das reibschlüssig mit der Wand eines Gehäuses (104b) der Dämpfungseinheit (104) zusammenwirkt, einen ersten rohrförmigen Teil (104'a), dessen Außenwand reibschlüssig mit dem besagten Gehäuse (104b) zusammenwirkt, und einen zweiten rohrförmigen Teil (104"a) umfaßt, der ein Verbindungselement (101) aufnehmen kann, das die besagte zusätzliche Auflagestelle (D) definiert.

5. Stabilisierungsvorrichtung nach Anspruch 3, **dadurch gekennzeichnet,** daß das besagte bewegliche Element (104d), das reibschlüssig mit der Wand des Gehäuses (104b) der Dämpfungseinheit (104) zusammenwirkt, einen Körper (104d) umfaßt, der in etwa senkrecht an einem Verbindungselement (101) gelagert ist, wobei dieser Körper an seinem Umfang mit einem ausgebauchten Teil (105) versehen ist, der reibschlüssig mit der Wand des Gehäuses (104b) zusammenwirkt.

6. Stabilisierungsvorrichtung nach einem der Ansprüche 1 oder 2, **dadurch gekennzeichnet,** daß die Dämpfungseinheit (104) wenigstens ein Element (104e) umfaßt, das im Verhältnis zur ortsfesten Struktur gesichert ist und reibschlüssig mit der Außenwand eines beweglichen Elements (101) zusammenwirkt, das die besagte zusätzliche Auflagestelle (D) trägt.

7. Stabilisierungsvorrichtung nach Anspruch 6, **dadurch gekennzeichnet,** daß das besagte Element (104e), das reibschlüssig mit der Außenwand des beweglichen Elements (101) zusammenwirkt, ein Runddichtring ist, der in einer Auskehlung aufgenommen ist, die in einem fest mit der besagten ortsfesten Struktur (200) verbundenen Gehäuse (104b) vorgesehen ist.

8. Stabilisierungsvorrichtung nach einem der Ansprüche 1 oder 2, **dadurch gekennzeichnet,** daß die Dämpfungseinheit ein Luftdämpfer ist.

9. Stabilisierungsvorrichtung nach einem der Ansprüche 1 bis 2, **dadurch gekennzeichnet,** daß die Dämpfungseinheit ein Öldämpfer ist.

10. Kraftfahrzeugscheinwerfer, der mit wenigstens einem Reflektor versehen und mit einer Vorrichtung zur Verstellung der Ausrichtung des abgestrahlten Lichtbündels in zwei senkrechten Richtungen ausgerüstet ist, die drei Auflagepunkte auf dem Reflektor definiert, wobei die besagten Auflagepunkte an den drei Spitzen eines rechtwinkligen Dreiecks angeordnet sind, **dadurch gekennzeichnet,** daß er eine Vorrichtung zur Stabilisierung des Reflektors nach einem der Ansprüche 1 bis 9 umfaßt.

11. Scheinwerfer nach Anspruch 10, **dadurch gekennzeichnet,** daß die Stabilisierungsvorrichtung in einem dritten Punkt vorgesehen ist, wobei sich die vier Punkte in etwa an den vier Spitzen eines Dreiecks befinden.

## Claims

1. A stabilising device (100) for at least one reflector (R) of a motor vehicle headlight, comprising at least one abutment giving essentially point contact (A, B, C) against a fixed structure (200), and a portion (R1) cantilevered with respect to the said essentially point contact abutment (A, B, C), characterised in that it includes at least one damping assembly (104), a first end (102) of which defines a supplementary abutment (D) for the said cantilevered portion (R1) of the reflector (R), and a second end (104b) of which is fixed to the said fixed structure (200), in such a way that, for light mechanical forces applied to the reflector (R), the said supplementary abutment (D) remains essentially immobile with respect to the said fixed structure (200), and for heavy mechanical forces applied to the reflector (R), the said supplementary abutment (D) is displaced axially with respect to the said fixed structure (200) with limited amplitudes of displacement.

2. A stabilising device (100) according to Claim 1, characterised in that the first end (102) of the damping device includes a spherical head which is adapted to be mounted in the manner of a ball joint in a seating (M2) of complementary form which is provided at the rear of the cantilevered portion (R1) of the said reflector (R).

3. A stabilising device according to Claim 1 or Claim 2, characterised in that the damping assembly (104) comprises a movable element (104a) which cooperates by friction with a wall of a housing (104b) secured to the fixed structure (200) and guided by the said wall.

4. A stabilising device according to Claim 3, characterised in that the said movable element (104a), cooperating by friction with the wall of a housing (104b) of the damping assembly (104), comprises a tubular first portion (104a'), the outer wall of which is in frictional cooperation with the said housing (104b), while a second portion (104a") is adapted to receive a coupling element (101) defining the said supplementary abutment (D).

5. A stabilising device according to Claim 3, characterised in that the said movable element (104d), cooperating by friction with the wall of the housing (104b) of the damping device (104), comprises a body (104d) which is mounted substantially at right angles on a coupling element (101), the said body being provided at its periphery with an expanded portion (105) which is in frictional cooperation with the wall of the housing (104b).

6. A stabilising device according to Claim 1 or Claim 2, characterised in that the damping device (104) includes at least one element (104e) which is immobilised with respect to the fixed structure and which is in frictional cooperation with the outer wall of a movable element (101) which carries the said supplementary abutment (D).

7. A stabilising device according to Claim 6, characterised in that the said element (104e) in frictional cooperation with the outer wall of the movable element (101) is a toroidal seal mounted in a groove formed in a housing (104b) which is secured to the said fixed structure (200).

8. A stabilising device according to Claim 1 or Claim 2, characterised in that the damping assembly is an air damper.

9. A stabilising device according to Claim 1 or Claim 2, characterised in that the damping device is an oil damper.

10. A motor vehicle headlight having at least one reflector and being equipped with a device for adjusting the orientation of the light beam emitted in two perpendicular directions and defining three abutment points on the reflector, the said abutment points being disposed at the three corners of a right-angled triangle, characterised in that it includes a stabilising device for the reflector according to any one of Claims 1 to 9.

11. A headlight according to Claim 10, characterised in that the stabilising device is arranged at a fourth point, the four points being situated substantially at the four corners of a rectangle.
